(19) Europäisches Patentamt
European Patent Office
Office européen des brevets

(11) EP 4 167 335 A1

(12) EUROPEAN PATENT APPLICATION
published in accordance with Art. 153(4) EPC

(43) Date of publication:
19.04.2023 Bulletin 2023/16

(51) International Patent Classification (IPC):
H01M 10/0562 (2010.01)

(21) Application number: 20940349.2

(52) Cooperative Patent Classification (CPC):
H01M 10/0562; Y02E 60/10

(22) Date of filing: 12.06.2020

(86) International application number:
PCT/IB2020/000526

(87) International publication number:
WO 2021/250437 (16.12.2021 Gazette 2021/50)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicants:
• NISSAN MOTOR CO., LTD.
Kanagawa 221-0023 (JP)
• RENAULT s.a.s.
92100 Boulogne-Billancourt (FR)

(72) Inventors:
• DOI, Shotaro
Atsugi-shi, Kanagawa 243-0123 (JP)

• TAMURA, Yuko
Atsugi-shi, Kanagawa 243-0123 (JP)
• KISHI, Michito
Atsugi-shi, Kanagawa 243-0123 (JP)
• LI, Zhenguang
Atsugi-shi, Kanagawa 243-0123 (JP)
• OGIHARA, Wataru
Atsugi-shi, Kanagawa 243-0123 (JP)

(74) Representative: Grünecker Patent- und
Rechtsanwälte
PartG mbB
Leopoldstraße 4
80802 München (DE)

(54) SECONDARY BATTERY

(57)     [Problem] To provide a means for inhibiting the growth of dendrite in a solid electrolyte layer while suppressing the decrease in ion conductivity in the solid electrolyte layer, in a secondary battery which includes a solid electrolyte layer.

[Solution] In a secondary battery which includes a power-generating element formed by laminating a positive electrode which contains a positive electrode active material, a solid electrolyte layer which contains a solid electrolyte, and a negative electrode which contains a negative electrode active material, a binder having a Young's modulus of 200 [MPa] or lower is further contained in the solid electrolyte layer.

[Fig. 3]

SOLID ELECTROLYTE

SOLID ELECTROLYTE

BINDER (LOW YOUNG'S MODULUS)

BINDER (HIGH YOUNG'S MODULUS)

## Description

### TECHNICAL FIELD

The present invention relates to a secondary battery.

### BACKGROUND ART

In recent years, in order to fight global warming, there is a strong need for reduction of the amount of carbon dioxide. In the automobile industry, there are increasing expectations for a reduction of carbon dioxide emissions by introduction of electric vehicles (EV) and hybrid electric vehicles (HEV), and development of non-aqueous electrolyte secondary batteries such as secondary batteries for motor driving, which are key to practical application of such vehicles, has been actively conducted.

A secondary battery for motor driving is required to have extremely high output characteristics and high energy as compared with a lithium-ion secondary battery for consumer use used in a mobile phone, a notebook computer, and the like. Therefore, a lithium-ion secondary battery having the highest theoretical energy among all practical batteries has attracted attention, and is currently being rapidly developed.

Here, lithium-ion secondary batteries that are currently widespread use a combustible organic electrolyte solution as an electrolyte. In such liquid-based lithium-ion secondary batteries, safety measures against liquid leakage, short circuit, overcharge, and the like are more strictly required than other batteries.

Therefore, in recent years, research and development on an all-solid battery such as an all-solid lithium-ion secondary battery using an oxide-based or sulfide-based solid electrolyte as an electrolyte have been actively conducted. The solid electrolyte is a material mainly made of an ion conductor that enables ion conduction in a solid. For this reason, in an all-solid lithium-ion secondary battery, in principle, various problems caused by combustible organic electrolyte solution do not occur unlike the conventional liquid-based lithium-ion secondary battery. In general, use of a high-potential and large-capacity positive electrode material and a large-capacity negative electrode material can achieve significant improvement in output density and energy density of a battery. An all-solid lithium-ion secondary battery using a sulfur simple substance (S) or a sulfide-based material as a positive electrode active material is a promising candidate.

Meanwhile, in the lithium-ion secondary battery, the negative electrode potential decreases with the progress of charging. When the negative electrode potential decreases to be lower than 0 V (vs. Li/Li+), metal lithium is precipitated at the negative electrode, and dendrite (tree-like) crystals are precipitated (this phenomenon is also referred to as "electrodeposition of metal lithium"). Particularly, in an all-solid battery using metal lithium or a lithium-containing alloy as a negative electrode active material, the electrodeposition of metal lithium is a charge reaction itself. Here, if the electrodeposition of metal lithium excessively occurs in the all-solid battery, the precipitated dendrite may penetrate the solid electrolyte layer to cause an internal short-circuit of the battery.

In order to prevent such electrodeposition of metal lithium in the all-solid battery, for example, US 2018/0342768 discloses a technique of coating solid electrolyte particles constituting a solid electrolyte layer with a polymer film containing a thermoplastic resin. According to US 2018/0342768, with such a configuration, the mechanical strength and porosity of the solid electrolyte layer are improved, thereby suppressing the growth of dendrite in the solid electrolyte layer.

### SUMMARY OF INVENTION

Technical Problem

According to US 2018/0342768, with such a configuration, the mechanical strength and porosity of the solid electrolyte layer are improved, thereby suppressing the growth of dendrite.

However, according to the study by the present inventors, it has been found that sufficient battery performance may not be obtained in some cases even when the technique described in US 2018/0342768 is adopted. That is, it has been found that, depending on the physical properties of the polymer to be adopted, the ion conductivity in the solid electrolyte layer may decrease, leading to deterioration of input/output characteristics of the battery.

Therefore, an object of the present invention is to provide a means for inhibiting the growth of dendrite in a solid electrolyte layer while suppressing the decrease in ion conductivity in the solid electrolyte layer as much as possible, in a secondary battery which includes a solid electrolyte layer.

Solution to Problem

According to one aspect of the present invention, there is provided a secondary battery which includes a power-generating element formed by laminating a positive electrode which contains a positive electrode active material, a solid electrolyte layer which contains a solid electrolyte, and a negative electrode which contains a negative electrode active material in this order. In the secondary battery, the solid electrolyte layer further contains a binder having a Young's modulus of 200 [MPa] or lower.

**BRIEF DESCRIPTION OF DRAWINGS**

Fig. 1 is a perspective view illustrating an appearance of a flat laminate type all-solid lithium-ion secondary battery as one embodiment of a secondary battery according to the present invention.

Fig. 2 is a cross-sectional view taken along line 2-2 illustrated in Fig. 1.

Fig. 3 is an explanatory view for explaining a mechanism by which ion conductivity of a solid electrolyte layer is improved in the case of using a binder having a low Young's modulus.

Fig. 4 shows photographs (secondary electron images and reflected electron images) obtained by observing cross sections of solid electrolyte layers with a scanning electron microscope (SEM) at normal pressure, the solid electrolyte layers being formed by changing Young's modulus of a binder contained in each of the solid electrolyte layers in a range of 1.3 [MPa] to 1300 [MPa], and subjecting the solid electrolyte layers to pressure-forming at a pressing pressure of 300 [MPa].

Fig. 5 is a cross-sectional view schematically illustrating a bipolar type all-solid lithium-ion secondary battery as one embodiment of the secondary battery according to the present invention.

Fig. 6 is a perspective view of a battery device including a bipolar type lithium ion secondary battery according to one embodiment of the present invention.

Fig. 7 is a side view as viewed from direction A illustrated in Fig. 6.

Fig. 8 is a graph in which measured values [S/cm] of ion conductivity are plotted against each Young's modulus [MPa] of the binder, regarding Comparative Examples 4 and 5, and Examples 4 and 7 to 10, in which the amount of the binder added to the solid electrolyte was 2 mass% in the section of Examples to be described later.

**DESCRIPTION OF EMBODIMENTS**

<<Secondary Battery>>

One aspect of the present invention is a secondary battery including a power-generating element formed by laminating a positive electrode which contains a positive electrode active material, a solid electrolyte layer which contains a solid electrolyte, and a negative electrode which contains a negative electrode active material in this order, in which the solid electrolyte layer further contains a binder having a Young's modulus of 200 [MPa] or lower. According to the secondary battery of the present invention, it is possible to inhibit the growth of dendrite in a solid electrolyte layer while suppressing the decrease in ion conductivity in the solid electrolyte layer as much as possible.

Hereinafter, the embodiments of the positive electrode for a secondary battery according to the present aspect will be described with reference to the drawings, but the technical scope of the present invention should be determined based on the description of the claims, and is not limited to the following embodiments. The dimensional ratios of the drawings are exaggerated for convenience of description and may differ from the actual ratios.

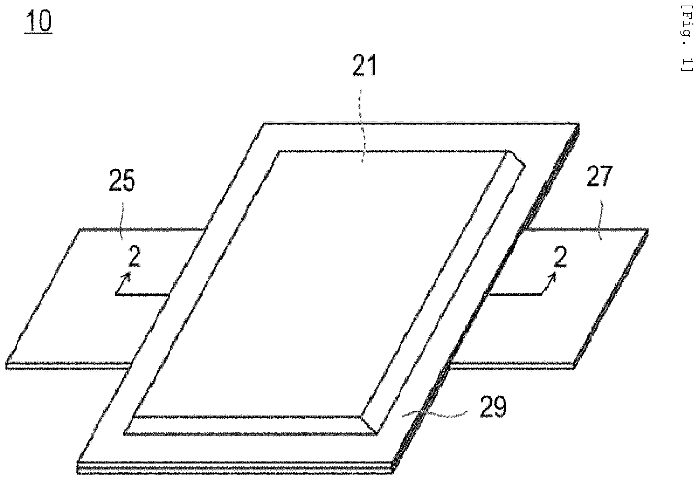

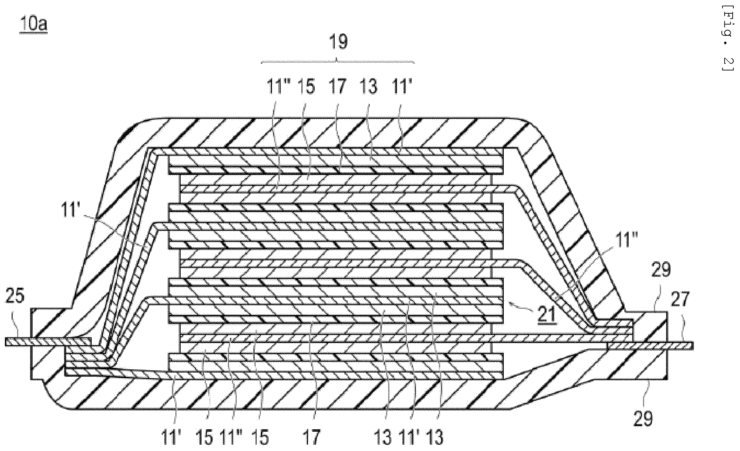

Fig. 1 is a perspective view illustrating an appearance of a flat laminate type all-solid lithium-ion secondary battery as one embodiment of a positive electrode for a secondary battery according to the present invention. Fig. 2 is a cross-sectional view taken along line 2-2 illustrated in Fig. 1. The battery is formed into the laminate type, thereby allowing the battery to be compact and have a high capacity. In the present specification, an embodiment will be described by taking, as an example, a case where a secondary battery is a flat laminate type (non-bipolar type) lithium-ion secondary battery illustrated in Figs. 1 and 2 (hereinafter also simply referred to as "laminate type battery"). However, in the case of viewing the present invention in an electric connection form (electrode structure) in the lithium-ion secondary battery according to the present aspect, the present invention can be applied to both a non-bipolar type (internal parallel connection type) battery and a bipolar type (internal serial connection type) battery.

As illustrated in Fig. 1, a laminate type battery 10 has a rectangular flat shape, and a negative electrode current collecting plate 25 and a positive electrode current collecting plate 27 for extracting electric power are extended from both sides of the battery. A power-generating element 21 is wrapped in a battery outer casing material (laminate film 29) of the laminate type battery 10a, and the periphery of the battery outer casing material is heat-sealed, and the power-generating element 21 is hermetically sealed in a state where the negative electrode current collecting plate 25 and the positive electrode current collecting plate 27 are extended to the outside.

The lithium-ion secondary battery according to the present aspect is not limited to a laminate type flat shape. A wound type lithium ion secondary battery is not particularly limited, and may have a cylindrical shape, or may have a rectangular flat shape obtained by deforming such a cylindrical shape. As for the lithium-ion secondary battery having the cylindrical shape, a laminate film may be used or a conventional cylindrical can (metal can) may be used as an outer casing material thereof, and the outer casing material is not particularly limited. Preferably, a power-generating element is housed in a laminate film including aluminum. According to this form, weight reduction can be achieved.

In addition, the extending of the current collecting plates (25 and 27) illustrated in Fig. 1 is also not particularly limited. The negative electrode current collecting plate 25 and the positive electrode current collecting plate 27 may be extended from the same side, or each of the negative electrode current collecting plate 25 and the positive electrode current collecting plate 27 may be divided into a plurality of pieces and extended from each side, and the extending is not limited to that illustrated in Fig. 1. In addition, in a wound type lithium-ion battery, for example, terminals may be formed by using a cylindrical can (metal can) instead of a tab.

As illustrated in Fig. 2, the laminate type battery 10a of the present embodiment has a structure in which the flat and substantially rectangular power-generating element 21 in which a charge and discharge reaction actually proceeds is sealed inside the laminate film 29 as the battery outer casing material. Here, the power-generating element 21 has a configuration in which a positive electrode, a solid electrolyte layer 17, and a negative electrode are laminated. The positive electrode has a structure in which a positive electrode active material layer 15 containing a positive electrode active material is disposed on both surfaces of a positive electrode current collector 11". The negative electrode has a structure in which a negative electrode active material layer 13 containing a negative electrode active material is disposed on both surfaces of a negative electrode current collector 11'. Specifically, the positive electrode, the solid electrolyte layer, and the negative electrode are laminated such that one positive electrode active material layer 15 and the negative electrode active material layer 13 adjacent thereto face each other with the solid electrolyte layer 17 interposed therebetween. Thus, the positive electrode, solid electrolyte layer, and negative electrode that are adjacent constitute one single battery layer 19. Therefore, it can be said that the laminate type battery 10a illustrated in Fig. 1 has a configuration in which a plurality of single battery layers 19 is laminated to be electrically connected in parallel.

As illustrated in Fig. 2, although the positive electrode active material layer 15 is disposed on only one surface of each of outermost positive electrode current collectors located in both outermost layers of the power-generating element 21, the active material layer may be provided on both surfaces. In other words, instead of using a current collector exclusively for an outermost layer provided with the active material layer only on one surface thereof, a current collector provided with the active material layer on both surfaces thereof may be used as it is as an outermost current collector. In some cases, the negative electrode active material layer 13 and the positive electrode active material layer 15 may be used as the negative electrode and the positive electrode, respectively, without using the current collectors (11' and 11").

The negative electrode current collector 11' and the positive electrode current collector 11" have a structure in which a negative electrode current collecting plate (tab) 25 and a positive electrode current collecting plate (tab) 27 which are electrically connected to the respective electrodes (the positive electrode and the negative electrode) are respectively attached to the negative electrode current collector 11' and the positive electrode current collector 11" and are led to an outside of the laminate film 29 so as to be sandwiched between ends of the laminate film 29 as the outer casing material. The positive electrode current collecting plate 27 and the negative electrode current collecting plate 25 may be attached to the positive electrode current collector 11" and the negative electrode current collector 11' of the respective electrodes with a positive electrode lead and a negative electrode lead (not illustrated) interposed therebetween, respectively by ultrasonic welding, resistance welding, or the like as necessary.

Hereinafter, main constituent members of the lithium-ion secondary battery according to the present aspect is applied will be described.

[Current Collector]

A current collector has a function of mediating transfer of electrons from electrode active material layers. A material constituting the current collector is not particularly limited. As the material constituting the current collector, for example, a metal or a resin having conductivity can be adopted.

Specific examples of the metal include aluminum, nickel, iron, stainless steel, titanium, copper, and the like. In addition to these, a clad material of nickel and aluminum, a clad material of copper and aluminum, or the like may be used. Further, a foil in which a metal surface is coated with aluminum may be used. Above all, aluminum, stainless steel, copper, and nickel are preferred from the viewpoint of the electron conductivity, the battery operating potential, the adhesion of the negative electrode active material by sputtering to the current collector, and the like.

Examples of the latter resin having conductivity include a resin obtained by adding a conductive filler to a non-conductive polymer material as necessary.

Examples of the non-conductive polymer material include polyethylene (PE; high density polyethylene (HDPE), low density polyethylene (LDPE), and the like), polypropylene (PP), polyethylene terephthalate (PET), polyether nitrile (PEN), polyimide (PI), polyamide imide (PAI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinyl chloride (PVC), polyvinylidene fluoride (PVdF), polystyrene (PS), and the like. Such a non-conductive polymer material can have excellent potential resistance or solvent resistance.

A conductive filler may be added to the conductive polymer material or the non-conductive polymer material as necessary. Particularly, in a case where a resin serving as a base material of the current collector is composed only of a non-conductive polymer, a conductive filler is essential to impart conductivity to the resin.

The conductive filler can be used without particular limitation as long as the conductive filler is a substance having conductivity. Examples of materials excellent in conductivity, potential resistance, or lithium-ion blocking property include metals and conductive carbon. Examples of the metals are not particularly limited, but preferably include at least one metal selected from the group consisting of Ni, Ti, Al, Cu, Pt, Fe, Cr, Sn, Zn, In, and Sb, or an alloy or a metal oxide containing these metals. The conductive carbon is not particularly limited. Preferably, examples of the conductive carbon include at least one selected from the group consisting of acetylene black, Vulcan (registered trademark), Black Pearl (registered trademark), carbon nanofiber, Ketjen black (registered trademark), carbon nanotube, carbon nanohorn, carbon nanoballoon, and fullerene.

The addition amount of the conductive filler is not particularly limited as long as sufficient conductivity can be imparted to the current collector, and is generally 5 to 80 mass% with respect to a total mass of 100 mass% of the current collector.

The current collector may have a single-layer structure made of a single material, or may have a laminated structure in which layers made of these materials are appropriately combined. From the viewpoint of weight reduction of the current collector, it is preferable that the current collector includes at least a conductive resin layer made of a resin having conductivity. From the viewpoint of blocking the movement of lithium ions between single battery layers, a metal layer may be provided in a part of the current collector. Further, as long as a negative electrode active material layer and a positive electrode active material layer to be described later have conductivity by themselves and can have a current collecting function, a current collector as a member different from these electrode active material layers is not necessarily used. In such an embodiment, the negative electrode active material layer described later as it is constitutes a negative electrode, and the positive electrode active material layer described later as it is constitutes a positive electrode.

[Solid Electrolyte Layer]

In the secondary battery according to the present aspect, the solid electrolyte layer is a layer that is interposed between the positive electrode active material layer and the negative electrode active material layer and essentially contains a solid electrolyte. The specific form of the solid electrolyte contained in the solid electrolyte layer is not particularly limited. Examples of the solid electrolyte include a sulfide solid electrolyte and an oxide solid electrolyte, and a sulfide solid electrolyte is preferred from the viewpoint of obtaining higher ion conductivity.

Examples of the sulfide solid electrolyte include $LiI-Li_2S-SiS_2$, $LiI-Li_2S-P_2O_5$, $LiI-Li_3PO_4-P_2S_5$, $Li_2S-P_2S_5$, $LiI-Li_3PS_4$, $LiI-LiBr-Li_3PS_4$, $Li_3PS_4$, $Li_2S-P_2S_5$, $Li_2S-P_2S_5-LiI$, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (where m and n are positive numbers, and Z is any of Ge, Zn, and Ga), $Li_2S-GeS_2$, $Li_2S-SiS_2-Li_3PO_4$, $Li_2S-SiS_2-Li_xMO_y$ (where x and y are positive numbers, and M is any of P, Si, Ge, B, Al, Ga, and In), and the like. The description of "$Li_2S-P_2S_5$" means a sulfide solid electrolyte obtained by using a raw material composition containing $Li_2S$ and $P_2S_5$, and the same applies to other descriptions.

The sulfide solid electrolyte may have, for example, a $Li_3PS_4$ skeleton, a $Li_4P_2S_7$ skeleton, or a $Li_4P_2S_6$ skeleton. Examples of the sulfide solid electrolyte having a $Li_3PS_4$ skeleton include $LiI-Li_3PS_4$, $LiI-LiBr-Li_3PS_4$, and $Li_3PS_4$. Examples of the sulfide solid electrolyte having a $Li_4P_2S_7$ skeleton include a Li-P-S-based solid electrolyte called LPS (e.g., $Li_7P_3S_{11}$). As the sulfide solid electrolyte, for example, LGPS expressed by $Li_{(4-x)}Ge_{(1-x)}P_xS_4$ (x satisfies $0 < x < 1$) or the like may be used. Above all, the sulfide solid electrolyte is preferably a sulfide solid electrolyte containing a P element, and the sulfide solid electrolyte is more preferably a material containing $Li_2S-P_2S_5$ as a main component. Furthermore, the sulfide solid electrolyte may contain halogen (F, Cl, Br, I) . Examples of the halogen-containing sulfide solid electrolyte include argyrodite type solid electrolytes ($Li_6PS_5Cl$ and $Li_6PS_5Br$), and these electrolytes are also materials that can be preferably used.

In a case where the sulfide solid electrolyte is $Li_2S-P_2S_5$ based, a molar ratio of $Li_2S$ and $P_2S_5$ is preferably within a range of $Li_2S : P_2S_5 = 50 : 50$ to $100 : 0$, and particularly preferably within a range of $Li_2S : P_2S_5 = 70 : 30$ to $80 : 20$.

In addition, the sulfide solid electrolyte may be sulfide glass, may be crystallized sulfide glass, or may be a crystalline material obtained by a solid phase method. The sulfide glass can be obtained, for example, by performing mechanical milling (ball milling or the like) on a raw material composition. The crystallized sulfide glass can be obtained, for example, by heat-treating sulfide glass at a temperature equal to or higher than a crystallization temperature. In addition, ion conductivity (e.g., Li ion conductivity) of the sulfide solid electrolyte at a normal temperature (25°C) is, for example, preferably $1 \times 10^{-5}$ S/cm or more, and more preferably $1 \times 10^{-4}$ S/cm or more. A value of the ion conductivity of the solid electrolyte can be measured by an AC impedance method.

Examples of the oxide solid electrolyte include a compound having a NASICON-type structure, and the like. Examples of the compound having a NASICON-type structure include a compound (LAGP) expressed by general formula: $Li_{1+x}Al_xGe_{2-x}(PO_4)_3$ ($0 \le x \le 2$), a compound (LATP) expressed by general formula: $Li_{1+x}Al_xTi_{2-x}(PO_4)_3$ ($0 \le x \le 2$), and the like. Other examples of the oxide solid electrolyte include LiLaTiO (e.g., $Li_{0.34}La_{0.51}TiO_3$), LiPON (e.g., $Li_{2.9}PO_{3.3}N_{0.46}$), LiLaZrO (e.g., $Li_7La_3Zr_2O_{12}$), and the like.

Examples of the shape of the solid electrolyte include particle shapes such as a perfectly spherical shape and an elliptically spherical shape, a thin film shape, and the like. When the solid electrolyte has a particle shape, the average particle diameter ($D_{50}$) is not particularly limited, but is preferably 40 um or less, more preferably 20 um or less, and still more preferably 10 um or less. Meanwhile, the average particle diameter ($D_{50}$) is preferably 0.01 um or more, and more preferably 0.1 um or more.

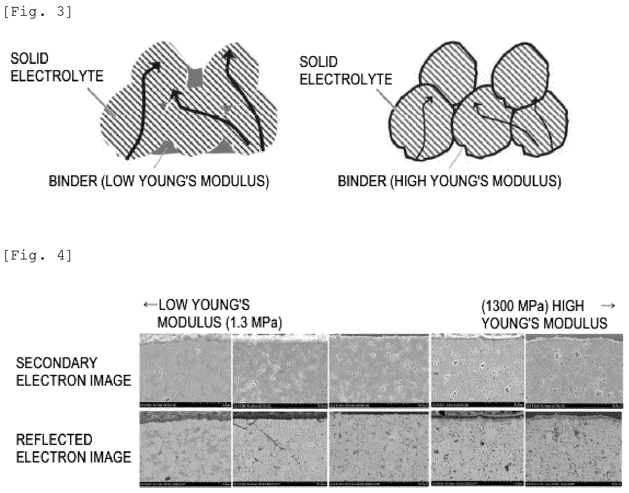

In the secondary battery according to the present aspect, the solid electrolyte layer further contains a binder in addition to the solid electrolyte described above. The binder is characterized in that it essentially contains a binder having a Young's modulus of 200 [MPa] or lower. The "Young's modulus" is a parameter, also referred to as "longitudinal elastic modulus", and is a proportionality constant of strain and stress in a coaxial direction in an elastic range in which Hooke's law holds. In the present specification, as the value of the Young's modulus of the binder, a value measured by a nanoindentation method described in the section of Examples to be described later is adopted. In a case where the binder contained in the solid electrolyte layer has a Young's modulus of 200 [MPa] or lower, the decrease in ion conductivity in the solid electrolyte layer can be sufficiently suppressed even after adding the binder to the solid electrolyte layer. This is presumed to be because, as illustrated in Fig. 3, in a case where a binder having a low Young's modulus is contained in the solid electrolyte layer, the binder present between the solid electrolyte particles is pushed out and moved to a void when a pressing pressure is applied at the time of producing the solid electrolyte layer or during operating the secondary battery, which allows the solid electrolyte particles to come into direct contact with each other. Meanwhile, even when a binder having a high Young's modulus is contained in the solid electrolyte layer, the phenomenon as described above does not occur, and the effect of improving the ion conductivity is not obtained. The experimental results supporting this fact are shown in Fig. 4. Fig. 4 shows photographs (secondary electron images and reflected electron images) obtained by observing cross sections of solid electrolyte layers with a scanning electron microscope (SEM) at normal pressure, the solid electrolyte layers being formed by changing Young's modulus of a binder contained in each of the solid electrolyte layers in a range of 1.3 [MPa] to 1300 [MPa], and subjecting the solid electrolyte layers to pressure-forming at a pressing pressure of 300 [MPa]. According to the micrographs shown in Fig. 4, it can be seen that, as the Young's modulus of the binder contained in the solid electrolyte layer decreases, the binder during the pressing process intrudes into the void between the solid electrolyte particles, and the solid electrolyte particles come into direct contact with each other. In the meantime, even a binder having a low Young's modulus can inhibit the growth of dendrite in the solid electrolyte layer by being contained in the solid electrolyte layer. In the conventional technique, a binder having a high Young's modulus is added in order to inhibit the growth of dendrite. Accordingly, it is impossible to avoid the decrease in the ion conductivity of the solid electrolyte layer. On the other hand, according to the present invention, it is possible to inhibit the growth of dendrite in the solid electrolyte layer while suppressing the decrease in ion conductivity in the solid electrolyte layer as much as possible. Some of the binders used in the secondary battery are cured due to crystallization by heating treatment or the like. However, since the binder according to the present invention has a Young's modulus of 200 [MPa] or lower, the binder is not cured (preferably not crystallized) by crystallization or the like as described above.

Here, the specific chemical structure of the binder having a Young's modulus of 200 [MPa] or lower is not particularly limited, and a binder having a conventionally known chemical structure can be appropriately used. As an example, the binder having a Young's modulus of 200 [MPa] or lower preferably contains one kind or two or more kinds selected from the group consisting of acrylonitrile-butadiene rubber (NBR), butadiene rubber (BR), polyvinylidene fluoride (PVdF) (including a compound in which a hydrogen atom is substituted with another halogen element), polytetrafluoroethylene (PTFE), styrene-butadiene rubber (SBR), polyethylene carbonate (PEC), and polyethylene oxide (PEO), and more preferably contains sulfide solid electrolyte or styrene-butadiene rubber (SBR), from the viewpoint of easily achieving a low Young's modulus. Even in the case of binders having an identical chemical structure, the value of Young's modulus can be controlled by adjusting the composition, the degree of polymerization, the crosslinking density, and the like. In the secondary battery according to the present aspect, the solid electrolyte layer preferably contains a binder having a Young's modulus of 200 [MPa] or lower. From the viewpoint of improving the ion conductivity of the solid electrolyte layer, the Young's modulus of the binder is preferably as low as possible. For example, the Young's modulus of the binder is preferably 100 [MPa] or lower, more preferably 50 [MPa] or lower, still more preferably 20 [MPa] or lower, yet still more preferably 7 [MPa] or lower, particularly preferably 3 [MPa] or lower, and most preferably 1 [MPa] or lower. The lower limit of the Young's modulus of the binder is not particularly limited, but is, for example, 0.1 [MPa] or higher.

In the secondary battery according to the present aspect, the solid electrolyte layer may further contain another binder (i.e., a binder having a Young's modulus of greater than 200 [MPa]) as long as the binder has a Young's modulus of 200 [MPa] or lower. The chemical structure of such a binder is also not particularly limited, and it is possible to use conventionally known binders for all-solid batteries and non-aqueous electrolyte secondary batteries.

However, from the viewpoint of sufficiently exhibiting the action and effect of the present invention, among the binders contained in the solid electrolyte layer, a binder having a Young's modulus of 200 [MPa] or lower is preferably a main component. Hence, a ratio of a content of the binder having a Young's modulus of 200 [MPa] or lower to a total of 100 mass% of the binder contained in the solid electrolyte layer is preferably 50 mass% or more. Further, the ratio of the content is more preferably 70 mass% or more, still more preferably 80 mass% or more, still more preferably 90 mass% or more, particularly preferably 95 mass , and most preferably 100 mass .

The thickness of the solid electrolyte layer varies depending on the configuration of the intended lithium-ion secondary battery, but is preferably 600 um or less, more preferably 500 um or less, and still more preferably 400 um or less from the viewpoint that the volume energy density of the battery can be improved. Meanwhile, the lower limit of the thickness of the solid electrolyte layer is not particularly limited, but is preferably 10 um or more, more preferably 50 um or more, and still more preferably 80 um or more.

The content of the binder having a Young's modulus of 200 [MPa] or lower in the solid electrolyte layer is not particularly limited, and is, for example, in a range of 1 to 12 mass%. From the viewpoint of enhancing the flexibility of the solid electrolyte layer to improve the flex resistance, the content is preferably 3 mass% or more with respect to 100 mass% of the solid electrolyte. Further, from the viewpoint of the effect of improving the ion conductivity of the solid electrolyte layer, the content is preferably 3 mass% or more and 5 mass% or less with respect to 100 mass% of the solid electrolyte.

[Negative Electrode (Negative Electrode Active Material Layer)]

In the secondary battery according to the present aspect, the negative electrode active material layer 13 contains a negative electrode active material. The type of the negative electrode active material is not particularly limited, and examples thereof include a carbon material, a metal oxide, and a metal active material. Examples of the carbon material include natural graphite, artificial graphite, mesocarbon microbead (MCMB), highly oriented graphite (HOPG), hard carbon, soft carbon, and the like. Examples of the metal oxide include $Nb_2O_5$, $Li_4Ti_5O_{12}$, and the like. Further, a silicon-based negative electrode active material or a tin-based negative electrode active material may be used. Here, silicon and tin belong to a Group 14 element, and are known to be a negative electrode active material that can greatly improve the capacity of a non-aqueous electrolyte secondary battery. Since simple substances of silicon and tin can occlude and release a large number of charge carriers (lithium ions and the like) per unit volume (mass), they become a high-capacity negative electrode active material. Here, a Si simple substance is preferably used as the silicon-based negative electrode active material. Similarly, it is also preferable to use a silicon oxide such as $SiO_x (0.3 \leq x \leq 1.6)$ disproportionated into two phases: a Si phase and a silicon oxide phase. At this time, the range of x is more preferably $0.5 \leq x \leq 1.5$, and still more preferably $0.7 \leq x \leq 1.2$. Further, an alloy containing silicon (silicon-containing alloy-based negative electrode active material) may be used. Meanwhile, examples of the negative electrode active material containing a tin element (tin-based negative electrode active material) include a Sn simple substance, a tin alloy (a Cu-Sn alloy and a Co-Sn alloy), an amorphous tin oxide, a tin silicon oxide, and the like. Among them, $SnB_{0.4}P_{0.6}O_{3.1}$ is exemplified as the amorphous tin oxide. In addition, $SnSiO_3$ is exemplified as the tin silicon oxide. As the negative electrode active material, a metal containing lithium may be used. Such a negative electrode active material is not particularly limited as long as it is an active material containing lithium, and examples thereof include lithium-containing alloys in addition to metal lithium. Examples of the lithium-containing alloys include an alloy of Li and at least one of In, Al, Si, and Sn. In some cases, two or more kinds of negative electrode active materials may be used in combination. Needless to say, a negative electrode active material other than the above-described negative electrode active materials may be used. The negative electrode active material preferably contains metal lithium, a silicon-based negative electrode active material, or a tin-based negative electrode active material, and particularly preferably contains metal lithium.

Examples of a shape of the negative electrode active material include a particle shape (a spherical shape, a fibrous shape), a thin film shape, and the like. In a case where the negative electrode active material has a particle shape, for example, the average particle diameter ($D_{50}$) of the particles is preferably within a range of 1 nm to 100 um, more preferably within a range of 10 nm to 50 um, still more preferably within a range of 100 nm to 20 um, and particularly preferably within a range of 1 to 20 um. In the meantime, the value of the average particle diameter ($D_{50}$) of active materials can be measured by laser diffraction scattering method.

The content of the negative electrode active material in the negative electrode active material layer is not particularly limited, but for example, is preferably within a range of 40 to 99 mass%, and more preferably within a range of 50 to 90 mass%.

Preferably, the negative electrode active material layer further contains a solid electrolyte. When the negative electrode active material layer contains the solid electrolyte, the ion conductivity of the negative electrode active material layer can be improved. The specific form of the solid electrolyte contained in the negative electrode active material layer is not particularly limited, and the examples and preferred forms described in the section of the solid electrolyte layer are similarly adopted. The content of the solid electrolyte in the negative electrode active material layer is, for example, preferably within a range of 1 to 60 mass%, and more preferably within a range of 10 to 50 mass%.

The negative electrode active material layer may further contain at least one of a binder and a conductive aid in addition to the negative electrode active material and the solid electrolyte described above. Here, the specific form of the binder that can be contained in the negative electrode active material layer is not particularly limited, and the examples and preferred forms described in the section of the solid electrolyte layer are similarly adopted. Hence, it is preferable that the negative electrode active material layer also contains a binder having a Young's modulus of 200 [MPa] or lower.

Examples of the conductive aid include, but are not limited to, metals such as aluminum, stainless steel (SUS), silver, gold, copper, and titanium, alloys or metal oxides containing these metals; carbon such as carbon fibers (specifically, vapor grown carbon fibers (VGCF), polyacrylonitrile-based carbon fibers, pitch-based carbon fibers, rayon-based carbon fibers, and activated carbon fibers), carbon nanotubes (CNT), and carbon black (specifically, acetylene black, Ketjen black (registered trademark), furnace black, channel black, thermal lamp black, and the like). In addition, a particle-shaped ceramic material or resin material coated with the metal material by plating or the like can also be used as the conductive aid. Among these conductive aids, the conductive aid preferably contains at least one selected from the group consisting of aluminum, stainless steel, silver, gold, copper, titanium, and carbon, more preferably contains at least one selected from the group consisting of aluminum, stainless steel, silver, gold, and carbon, and still more preferably contains at least one kind of carbon from the viewpoint of electrical stability. These conductive aids may be used singly or in combination of two or more kinds thereof.

The shape of the conductive aid is preferably a particle shape or a fibrous shape. In a case where the conductive aid has a particle shape, the shape of the particles is not particularly limited, and may be any shape such as a powder shape, a spherical shape, a rod shape, a needle shape, a plate shape, a columnar shape, an irregular shape, a scaly shape, and a spindle shape.

The thickness of the negative electrode active material layer varies depending on the configuration of the intended all-solid battery, but is preferably, for example, within a range of 0.1 to 1000 $\mu$m.

[Positive Electrode Active Material Layer]

In the secondary battery according to the present aspect, a positive electrode active material layer 15 contains a positive electrode active material. The specific form of the positive electrode active material is not particularly limited, and there is appropriately referred to the conventionally known knowledge. Particularly, it is preferable that the positive electrode active material layer contains a sulfur-containing positive electrode active material. The kind of the sulfur-containing positive electrode active material is not particularly limited, and examples thereof include particles or a thin film of an organic sulfur compound or an inorganic sulfur compound in addition to the sulfur simple substance (S). Any material may be used as long as the material can release lithium ions during charging and occlude lithium ions during discharging by utilizing the oxidation-reduction reaction of sulfur. Examples of the organic sulfur compound include a disulfide compound, sulfur-modified polyacrylonitrile represented by the compounds described in WO 2010/044437 A, sulfur-modified polyisoprene, rubeanic acid (dithiooxamide), carbon polysulfide, and the like. Among the compounds, disulfide compounds, sulfur-modified polyacrylonitrile, and rubeanic acid are preferred, and sulfur-modified polyacrylonitrile is particularly preferred. As the disulfide compound, a disulfide compound having a dithiobiurea derivative, a thiourea group, a thioisocyanate or a thioamide group is more preferred. Here, the sulfur-modified polyacrylonitrile is modified polyacrylonitrile containing a sulfur atom obtained by mixing sulfur powder and polyacrylonitrile and heating the mixture under an inert gas or under reduced pressure. The estimated structure is a structure in which ring closure causes polyacrylonitrile to be polycyclic, and at least a part of the S is bound to C, as shown in, for example, Chem. Mater. 2011, 23, 5024-5028. The compound described in this literature has strong peak signals around 1330 cm$^{-1}$ and 1560 cm$^{-1}$ in the Raman spectrum, and further has peaks around 307 cm$^{-1}$, 379 cm$^{-1}$, 472 cm$^{-1}$, and 929 cm$^{-1}$. Meanwhile, the inorganic sulfur compound is preferred because it is excellent in stability, and specific examples thereof include sulfur simple substance (S), S-carbon composite, $TiS_2$, $TiS_3$, $TiS_4$, NiS, $NiS_2$, CuS, $FeS_2$, $Li_2S$, $MoS_2$, $MoS_3$, and the like. Among the compounds, S, S-carbon composite, $TiS_2$, $TiS_3$, $TiS_4$, $FeS_2$, and $MoS_2$ are preferred, sulfur simple substance (S), S-carbon composite, $TiS_2$, and $FeS_2$ are more preferred, and sulfur simple substance (S) is particularly preferred. Here, the S-carbon composite contains sulfur powder and a carbon material, and is in the form of a composite obtained by subjecting these materials to heating treatment or mechanical mixing. More specifically, the S-carbon composite is in the form where sulfur is distributed on the surface or in fine pores of the carbon material, in the form where sulfur and the carbon material are uniformly dispersed at the nano level and the sulfur and the carbon material are aggregated into particles, in the form where the carbon material is distributed on the surface or inside of fine sulfur powder, or in the form where a plurality of these forms is combined.

The positive electrode active material layer may contain a sulfur-free positive electrode active material in place of or in addition to the sulfur-containing positive electrode active material. Examples of the sulfur-free positive electrode active material include layered rock salt-type active materials such as $LiCoO_2$, $LiMnO_2$, $LiNiO_2$, $LiVO_2$, and $Li(Ni-Mn-Co)O_2$, spinel-type active materials such as $LiMn_2O_4$ and $LiNi_{0.5}Mn_{1.5}O_4$, olivine-type active materials such as $LiFePO_4$ and $LiMnPO_4$, and Si-containing active materials such as $Li_2FeSiO_4$ and $Li_2MnSiO_4$. Examples of the oxide active material other than those described above include $Li_4Ti_5O_{12}$.

In some cases, two or more kinds of positive electrode active materials may be used in combination. Needless to say, a positive electrode active material other than the above-described positive electrode active materials may be used.

Examples of a shape of the positive electrode active material include particle shapes (a spherical shape and a fibrous shape), a thin film shape, and the like. In a case where the positive electrode active material has a particle shape, for example, the average particle diameter ($D_{50}$) of the particles is preferably within a range of 1 nm to 100 um, more preferably within a range of 10 nm to 50 um, still more preferably within a range of 100 nm to 20 um, and particularly preferably within a range of 1 to 20 um. In the present specification, the value of the average particle diameter ($D_{50}$) of the active material can be measured by a laser diffraction scattering method.

The content of the positive electrode active material in the positive electrode active material layer is not particularly limited, but for example, is preferably within a range of 40 to 99 mass%, and more preferably within a range of 50 to 90 mass%. The positive electrode active material layer may further contain a conductive aid and/or a binder. As for specific and preferred forms of these materials, those described in the section of the negative electrode active material layer described above can be similarly adopted. Hence, it is preferable that the positive electrode active material layer also contains a binder having a Young's modulus of 200 [MPa] or lower.

[Positive Electrode Current Collecting Plate and Negative Electrode Current Collecting Plate]

A material constituting the current collecting plates (25 and 27) is not particularly limited, and a known highly conductive material conventionally used as a current collecting plate for a secondary battery can be used. As the material constituting the current collecting plates, for example, a metal material such as aluminum, copper, titanium, nickel, stainless steel (SUS), or an alloy thereof is preferred. From the viewpoint of weight reduction, corrosion resistance, and high conductivity, aluminum and copper are more preferred, and aluminum is particularly preferred. An identical material or different materials may be used for the positive electrode current collecting plate 27 and the negative electrode current collecting plate 25.

[Positive Electrode Lead and Negative Electrode Lead]

Although not illustrated, the current collector (11' or 11") and the current collecting plate (25 or 27) may be electrically connected with a positive electrode lead or a negative electrode lead interposed therebetween. As a material constituting the positive electrode lead and the negative electrode lead, a material used in a known lithium-ion secondary battery can be similarly adopted. The portion taken out from an outer casing is preferably covered with a heat resistant and insulating heat shrinkable tube or the like so as not to affect a product (e.g., an automotive component, particularly an electronic device, or the like) due to electric leakage caused by contact with peripheral devices, wiring lines, or the like.

[Battery Outer Casing Material]

As the battery outer casing material, a known metal can case can be used, and a bag-shaped case using the aluminum-containing laminate film 29, which can cover a power-generating element as illustrated in Figs. 1 and 2, can be used. As the laminate film, for example, a laminate film or the like having a three-layer structure formed by laminating PP, aluminum, and nylon can be used, but the laminate film is not limited thereto. The laminate film is desirable from the viewpoint of high output and excellent cooling performance, and suitable application for batteries for large devices for EV and HEV. Further, from the perspective of easy adjustment of a group pressure applied to the power-generating element from an outside, the outer casing body is more preferably a laminate film containing aluminum.

The laminate type battery 10a according to the embodiment shown in Fig. 1 and Fig. 2 has a configuration in which a plurality of single battery layers is connected in parallel, and thus has a high capacity and excellent cycle durability. Therefore, the laminate type battery according to the present embodiment is suitably used as a power source for driving EV and HEV.

Although one embodiment of the lithium-ion secondary battery has been described above, the present invention is not limited to only the configurations described in the above-described embodiment, and can be appropriately changed based on the description of the claims.

The type of battery to which the lithium-ion secondary battery according to the present invention is applied, is for example, a bipolar type (bipolar type) battery including a bipolar electrode having a positive electrode active material layer electrically coupled to one surface of a current collector and a negative electrode active material layer electrically coupled to an opposite surface of the current collector.

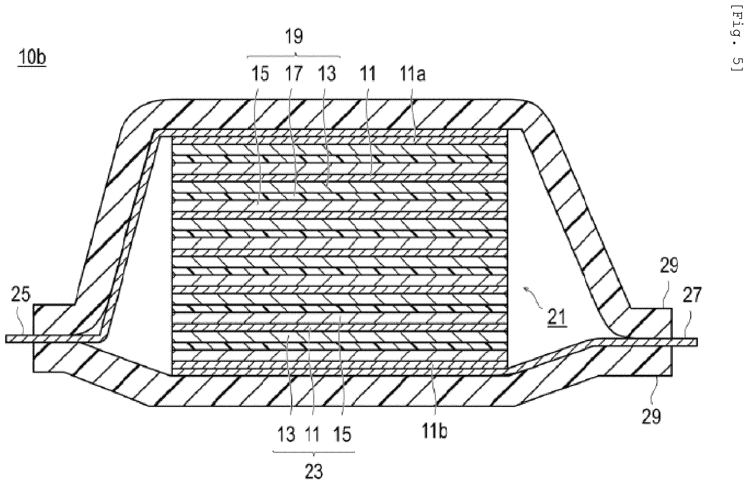

Fig. 5 is a cross-sectional view schematically illustrating a bipolar type (bipolar type) lithium-ion secondary battery (hereinafter, also simply referred to as "bipolar secondary battery") as one embodiment of the lithium-ion secondary battery according to the present invention.

A bipolar type secondary battery 10b illustrated in Fig. 5 has a structure in which a substantially rectangular power-generating element 21 in which a charge and discharge reaction actually proceeds is sealed inside the laminate film 29 as the battery outer casing body.

As illustrated in Fig. 5, the power-generating element 21 of the bipolar type secondary battery 10b of the present embodiment has a plurality of bipolar type electrodes 23 in which the positive electrode active material layer 15 electrically coupled to one surface of a current collector 11 is formed, and the negative electrode active material layer 13 electrically coupled to an opposite surface of the current collector 11 is formed. The bipolar type electrodes 23 are laminated with the solid electrolyte layer 17 interposed therebetween to form the power-generating element 21. The solid electrolyte layer 17 has a configuration in which a solid electrolyte is formed in layers. As illustrated in Fig. 5, the solid electrolyte layer 17 is disposed to be sandwiched between the positive electrode active material layer 15 of one bipolar type electrode 23 and the negative electrode active material layer 13 of another bipolar type electrode 23 adjacent to the one bipolar type electrode 23.

The positive electrode active material layer 15, the solid electrolyte layer 17, and the negative electrode active material layer 13 that are adjacent constitute one single battery layer 19. Therefore, it can also be said that the bipolar type secondary battery 10b has a configuration in which the single battery layers 19 are laminated. The positive electrode active material layer 15 is formed only on one surface of an outermost layer current collector 11a on the positive electrode side located in an outermost layer of the power-generating element 21. Further, the negative electrode active material layer 13 is formed only on one surface of an outermost layer current collector 11b on the negative electrode side located in an outermost layer of the power-generating element 21.

Further, in the bipolar type secondary battery 10b illustrated in Fig. 5, a positive electrode current collecting plate (positive electrode tab) 25 is disposed so as to be adjacent to the outermost layer current collector 11a on the positive electrode side, and is extended to be led out from the laminate film 29 as the battery outer casing body. Meanwhile, the negative electrode current collecting plate (negative electrode tab) 27 is disposed so as to be adjacent to the outermost layer current collector 11b on the negative electrode side, and is similarly extended to be led out from the laminate film 29.

The number of times of lamination of the single battery layers 19 is adjusted according to a desired voltage. Further, in the bipolar type secondary battery 10b, the number of times of lamination of the single battery layers 19 may be reduced as long as sufficient output can be secured even when the thickness of the battery is reduced as much as possible. Also, the bipolar type secondary battery 10b preferably has a structure in which the power-generating element 21 is sealed in the laminate film 29 as the battery outer casing body under reduced pressure, and the positive electrode current collecting plate 27 and the negative electrode current collecting plate 25 are extended to the outside of the laminate film 29 in order to prevent external impact and environmental deterioration during use.

Further, the secondary battery according to the present aspect need not be an all-solid type. Hence, the solid electrolyte layer may further contain a conventionally known liquid electrolyte (electrolyte solution). The amount of the liquid electrolyte (electrolyte solution) that can be contained in the solid electrolyte layer is not particularly limited, but is preferably such an amount that the shape of the solid electrolyte layer formed by the solid electrolyte is maintained and liquid leakage of the liquid electrolyte (electrolyte solution) does not occur.

The liquid electrolyte (electrolyte solution) that can be used has a form in which a lithium salt is dissolved in an organic solvent. Examples of the organic solvent to be used include dimethyl carbonate (DMC), diethyl carbonate (DEC), dipropyl carbonate (DPC), ethyl methyl carbonate (EMC), methyl propionate (MP), methyl acetate (MA), methyl formate (MF), 4-methyl dioxolane (4MeDOL), dioxolane (DOL), 2-methyltetrahydrofuran (2MeTHF), tetrahydrofuran (THF), dimethoxyethane (DME), propylene carbonate (PC), butylene carbonate (BC), dimethylsulfoxide (DMSO), $\gamma$-butyrolactone (GBL), and the like. Among all, the organic solvent is preferably chain carbonate, is more preferably at least one selected from the group consisting of diethyl carbonate (DEC), ethyl methyl carbonate (EMC), and dimethyl carbonate (DMC), and is more preferably selected from ethyl methyl carbonate (EMC) and dimethyl carbonate (DMC), from the viewpoint of further improving rapid charge characteristics and output characteristics.

Examples of the lithium salt include $Li(FSO_2)_2N$ (lithium bis (fluorosulfonyl) imide) ; LiFSI, $Li(C_2F_5SO_2)_2N$, $LiPF_6$, $LiBF_4$, $LiClO_4$, $LiAsF_6$, $LiCF_3SO_3$, and the like. Above all, the lithium salt is preferably $Li(FSO_2)_2N(LiFSI)$ from the viewpoint of battery output and charge and discharge cycle characteristics.

The liquid electrolyte (electrolyte solution) may further contain an additive other than the components described above. Specific examples of such a compound include ethylene carbonate, vinylene carbonate, methylvinylene carbonate, dimethylvinylene carbonate, phenylvinylene carbonate, diphenylvinylene carbonate, ethylvinylene carbonate, diethylvinylene carbonate, vinylethylene carbonate, 1,2-divinylethylene carbonate, 1-methyl-1-vinylethylene carbonate, 1-methyl-2-vinylethylene carbonate, 1-ethyl-1-vinylethylene carbonate, 1-ethyl-2-vinylethylene carbonate, vinylvinylene carbonate, arylethylene carbonate, vinyloxymethylethylene carbonate, aryloxymethylethylene carbonate, acryloxymethylethylene carbonate, methacryloxymethylethylene carbonate, ethynylethylene carbonate, propargylethylene carbonate, ethynyloxymethylethylene carbonate, propargyloxyethylene carbonate, methylene ethylene carbonate, 1,1-dimethyl-2-methylene ethylene carbonate, and the like. These additives may be used singly or in combination of two or more kinds thereof. The amount of the additive used in the electrolyte solution can be appropriately adjusted.

[Battery Device]

The secondary battery according to one aspect of the present invention described above is preferably in a state of being pressurized in a direction of lamination of the power-generating element at the time of operating the battery. Thus, the secondary battery according to one aspect of the present invention is preferably used together with a pressurizing member that pressurizes the power-generating element of the secondary battery in the direction of lamination. Therefore, according to another aspect of the present invention, there is also provided a battery device including the secondary battery according to one aspect of the present invention described above and the pressurizing member that pressurizes the power-generating element of the secondary battery in the direction of lamination.

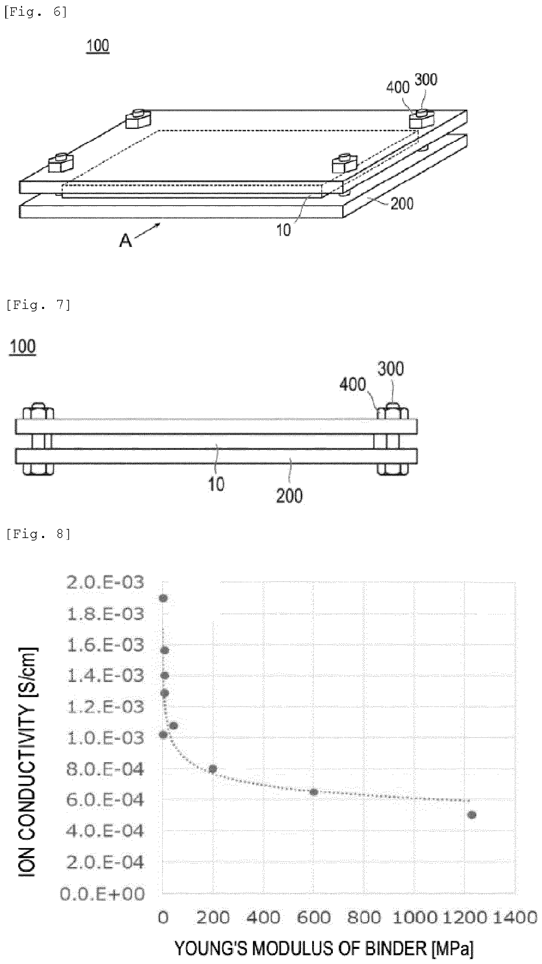

Fig. 6 is a perspective view of a battery device including a bipolar type lithium ion secondary battery according to one embodiment of the present invention. Fig. 7 is a side view as viewed from direction A illustrated in Fig. 6.

As illustrated in Fig. 6, a battery device 100 including a laminate type battery 10 according to one aspect of the present invention includes the laminate type battery 10 illustrated in Fig. 1, two metal plates 200 sandwiching the laminate type battery 10, and fastening members: bolts 300 and nuts 400. The fastening members (the bolts 300 and the nuts 400) have a function of fixing the laminate type battery 10 sandwiched by the metal plates 200. As a result, the metal plates 200 and the fastening members (the bolts 300 and the nuts 400) function as a pressurizing member that pressurizes a power-generating element 21 included in the laminate type battery 10 in a direction of lamination of the power-generating element. The pressurizing member is not particularly limited as long as the pressurizing member can pressurize the power-generating element 21 included in the laminate type battery 10 in the direction of lamination of the power-generating element. Typically, a combination of plates formed of a material having rigidity such as the metal plates 200 and the above-described fastening members is used as the pressurizing member. In addition to the bolts 300 and the nuts 400, a tension plate that fixes the end of the metal plate 200 so as to pressurize the power-generating element 21 in the direction of lamination of the power-generating element, or the like may be used as a fastening member. The magnitude of the pressing pressure applied to the power-generating element by the pressurizing member is not particularly limited, and may be appropriately determined in consideration of desired battery performance. From the viewpoint of the battery performance to be obtained, it is preferable that the pressurizing member applies a pressing pressure of 50 to 200 [MPa] in the direction of lamination of the power-generating element, and it is more preferable that the pressurizing member applies a pressing pressure of 80 to 150 [MPa] in the direction of lamination of the power-generating element.

According to the battery device of the present aspect, the laminate type battery 10 is in a state of being pressurized in a direction of lamination of the power-generating element 21 at the time of operating the battery. As a result, even at the time of operating the battery, it is possible to enjoy the advantages obtained by causing the solid electrolyte layer to contain the binder having a low Young's modulus, as described with reference to Figs. 3 and 4, and it is possible to improve the ion conductivity of the solid electrolyte layer. Furthermore, the input/output characteristics can be improved while improving the energy density of the secondary battery, and thus this is preferred.

Examples

Hereinbelow, the present invention will be described in more detail with reference to Examples. However, the technical scope of the present invention is not limited to the following Examples. The following operation was performed inside an argon globe box (23°C, moisture: 0.1 ppm or less, oxygen concentration: 10 ppm or less) having a dew point of -70°C or lower. The Young's modulus of the binder used in each of the following experimental examples was measured in the following manner.

(Method for Measuring Young's modulus of Binder)

First, the Young's modulus was measured by the nanoindentation method using a nanoindenter "TI 980" manufactured by Hysitron Inc. as a measuring device. As the measurement indenter, a spherical diamond indenter having an indenter tip radius of 100 um was used. The measurement conditions were as follows:

Measurement mode: load-unload test
Maximum indentation depth: 4000 nm
Retention time at the time when the load reached the maximum: 0 seconds
Loading speed and unloading speed: 800 nm/sec

In the measurement, a binder to be measured for its Young's modulus was fixed to a glass substrate with an adhesive, and then the substrate was fixed to a sample stage with a vacuum chuck. Then, the relationship between the indentation depth and the indentation load was measured under the measurement conditions described above, and the relationship between the indentation strain and the average contact pressure was determined from the obtained measurement value (stress-strain curve). From the slope of the stress-strain curve thus determined, the composite elastic modulus Er at the time of pushing was determined based on Hertz contact equation, and a yield contact pressure Py was determined from the yield point. The Hertz contact equation is expressed by the following equation.

$$[\text{Equation 1}]$$

$$\text{Hertz contact equation}$$

$$P = 4/3 E_r R^{1/2} h^{3/2}$$

where P represents the indentation load [mN], $E_r$ represents the composite elastic modulus [GPa], R represents the indenter tip radius [um], and h represents the indentation depth [nm].

Then, a Poisson's ratio v of the sample was assumed based on the value of the composite elastic modulus $E_r$ obtained above, the Young's modulus value was calculated using the following equation. The value of the Young's modulus of the binder used in each of the experimental examples is shown in Table 1 below.

$$[\text{Equation 2}]$$

$$1/E_r = \{(1-\nu^2)/E\}_{sample} + \{(1-\nu_i^2)/E_i\}_{indenter}$$

where E is a Young's modulus [GPa] of a sample (binder), v is a Poisson's ratio of the sample (binder) (ratio between longitudinal strain and transverse strain when a load is applied to the sample (binder)), and $E_r$ is the composite elastic modulus [GPa] of the sample (binder) calculated above. Further, $\nu_i$ is a Poisson's ratio (0.06) of the diamond indenter, and $E_i$ is a Young's modulus (1141 [GPa]) of the diamond indenter.

<<Production Example of Test Blocking Cell>>

[Comparative Example 1]

[Production of Solid Electrolyte Layer (without Binder)]

An argyrodite type solid electrolyte ($Li_6PS_5Cl$) as a lithium ion conductive sulfide solid electrolyte was prepared. 100 mg of this solid electrolyte was weighed, put in a Macor tube with a size of 10 mm $\varphi$ so as to be sandwiched between aluminum foils (thickness: 20 um) functioning as electrodes, and uniaxially press-molded at 300 to 400 [MPa] at 25°C to produce a blocking cell (deactivated cell) having a configuration of aluminum foil (20 $\mu$m)/solid electrolyte layer (600 $\mu$m)/aluminium foil (20 um).

[Comparative Example 2]

[Production of Solid Electrolyte Layer (with Binder)]

Styrene-butadiene rubber (SBR) having a Young's modulus of 1229 [MPa] was prepared as a binder. Then, a dehydrated 1,3,5-trimethylbenzene solution in which 10.0 mass% of styrene-butadiene rubber produced in advance was dissolved was mixed with the binder so that the amount of the binder was 5 mass% with respect to 100 mass% of the same argyrodite type solid electrolyte ($Li_6PS_5Cl$) described above to prepare a primary mixed liquid. Further, a secondary mixed liquid was prepared by adding an appropriate amount of dehydrated 1,3,5-trimethylbenzene to the primary mixed liquid for viscosity adjustment. Furthermore, in order to improve the dispersibility of the mixed powder and the binder, the mixed powder was charged into a planetary centrifugal mixer and stirred at 2000 rpm for 4 minutes to prepare an electrolyte layer coating liquid.

An aluminum current collecting foil having a thickness of 20 um was placed on an applicator on the table, and the electrolyte layer coating liquid prepared above was applied onto the aluminum current collecting foil using a bar coater so that the gap was 230 um. Thereafter, the resultant was dried on a hot plate at 80°C for 10 minutes, and then vacuum-dried at 80°C for 12 hours to form a solid electrolyte layer. The total thickness of the solid electrolyte layer after drying was around 80 um.

Two sheets of the solid electrolyte layer produced above were punched out together with the aluminum current collecting foil with a punching machine with a size of φ10mm, and these layers were bonded together such that the surfaces of the solid electrolyte layers faced each other. Uniaxial pressing was performed on the solid electrolyte layers at a pressure of 300 MPa using a flat plate pressing machine to produce a blocking cell (deactivated cell) having a configuration of aluminum foil (20 μm)/solid electrolyte layer (80 μm)/aluminum foil (20 um).

[Comparative Example 3]

A blocking cell (deactivated cell) of this Comparative Example was produced in the same manner as in Comparative Example 2 described above except that the addition amount of the binder was 10 mass% with respect to 100 mass% of the solid electrolyte.

[Comparative Example 4]

Styrene-butadiene rubber (SBR) having a Young's modulus of 600 [MPa] was prepared as a binder. A blocking cell (deactivated cell) of this Comparative Example was produced in the same manner as in Comparative Example 2 described above except that the addition amount of the binder was 2 mass% with respect to 100 mass% of the solid electrolyte.

[Comparative Example 5]

Polyvinylidene fluoride (PVdF) having a Young's modulus of 1229 [MPa] was prepared as a binder. Then, a blocking cell (deactivated cell) of this Example was produced in the same manner as in Comparative Example 2 described above except that dehydrated butyl butyrate was used as a solvent for dissolving the PVdF binder, and the binder was added and mixed in an amount of 2 mass% with respect to 100 mass% of the same argyrodite type solid electrolyte (Li6PS5Cl) described above.

[Example 1]

Styrene-butadiene rubber (SBR) having a Young's modulus of 0.864 [MPa] was prepared as a binder. Then, a blocking cell (deactivated cell) of this Example was produced in the same manner as in Comparative Example 2 described above except that the binder was added and mixed in an amount of 10 mass% with respect to 100 mass% of the same argyrodite type solid electrolyte (Li6PS5Cl) described above.

[Example 2]

A blocking cell (deactivated cell) of this Comparative Example was produced in the same manner as in Example 1 described above except that the addition amount of the binder was 5 mass% with respect to 100 mass% of the solid electrolyte.

[Example 3]

A blocking cell (deactivated cell) of this Comparative Example was produced in the same manner as in Example 1 described above except that the addition amount of the binder was 3 mass% with respect to 100 mass% of the solid electrolyte.

[Example 4]

A blocking cell (deactivated cell) of this Comparative Example was produced in the same manner as in Example 1 described above except that the addition amount of the binder was 2 mass% with respect to 100 mass% of the solid electrolyte.

[Example 5]

Polyvinylidene fluoride (PVdF) having a Young's modulus of 6.98 [MPa] was prepared as a binder. Then, a blocking cell (deactivated cell) of this Example was produced in the same manner as in Example 1 described above except that dehydrated butyl butyrate was used as a solvent for dissolving the PVdF binder, and the binder was added and mixed in an amount of 10 mass% with respect to 100 mass% of the same argyrodite type solid electrolyte ($Li_6PS_5Cl$) described above.

[Example 6]

A blocking cell (deactivated cell) of this Comparative Example was produced in the same manner as in Example 5 described above except that the addition amount of the binder was 3 mass% with respect to 100 mass% of the solid electrolyte.

[Example 7]

A blocking cell (deactivated cell) of this Comparative Example was produced in the same manner as in Example 5 described above except that the addition amount of the binder was 2 mass% with respect to 100 mass% of the solid electrolyte.

[Example 8]

A blocking cell (deactivated cell) of this example was produced in the same manner as in Example 7 described above except that polyvinylidene fluoride (PVdF) having a Young's modulus of 42.4 [MPa] was used as a binder.

[Example 9]

A blocking cell (deactivated cell) of this example was produced in the same manner as in Example 7 described above except that polyvinylidene fluoride (PVdF) having a Young's modulus of 1.29 [MPa] was used as a binder.

[Example 10]

A blocking cell (deactivated cell) of this example was produced in the same manner as in Example 7 described above except that polyvinylidene fluoride (PVdF) having a Young's modulus of 200 [MPa] was used as a binder.

<<Evaluation Example of Test Blocking Cell>>

(Evaluation of Effective Ion Conductivity)

The effective ion conductivity of the blocking cell (deactivated cell) produced in each of the above-described experimental examples was measured by electrochemical impedance spectroscopy (EIS). Specifically, an impedance analyzer: model 1260A, manufactured by Solartron, was used as a measuring device, and as measurement conditions, the amplitude was set to 10 [mV], and the frequency was set to a range of 1 [MHz] to 0.1 [Hz].
Further, at the time of measurement, a pressing pressure of 100 [MPa] was applied in a direction of lamination of the sample. The resistance value was obtained from the intercept with the X-axis (real axis) of the Cole-Cole plot acquired by such EIS measurement, and normalized based on the cross-sectional area and the thickness of the sample to calculate the effective ion conductivity [S/cm]. The results are shown in Table 1 below. Table 1 also shows relative values in a case where the value of the effective ion conductivity of Comparative Example 1 is 100. Fig. 8 shows a graph in which measured values [S/cm] of ion conductivity are plotted against each Young's modulus [MPa] of the binder, regarding Comparative Examples 4 and 5, and Examples 4 and 7 to 10 in which the amount of the binder added to the solid electrolyte was 2 mass%.

(Evaluation of Presence or Absence of Destruction)

When the blocking cell (deactivated cell) produced in each of the above-described Examples was bent by 90 degrees, whether or not destruction occurred in the sample was visually examined. The results are shown in Table 1 below. In Table 1, "×" indicates that destruction occurred, and "o" indicates that destruction did not occur.

[Table 1]

| | Solid electrolyte | Binder | | | Effective ion conductivity | Presence or absence of destruction |
|---|---|---|---|---|---|---|
| | | Kind | Young's modulus [MPa] | Addition amount [%] | Relative value | |
| Comparative Example 1 | Li6PS5Cl | | - | | 100 | - |
| Comparative Example 2 | Li6PS5Cl | SBR | 1229 | 5 | 6 | - |
| Comparative Example 3 | Li6PS5Cl | SBR | 1229 | 10 | 2 | - |
| Comparative Example 4 | Li6PS5Cl | SBR | 600 | 2 | 22 | - |
| Comparative Example 5 | Li6PS5Cl | PVdF | 1229 | 2 | 17 | - |
| Example 1 | Li6PS5Cl | SBR | 0.864 | 10 | 41 | ○ |
| Example 2 | Li6PS5Cl | SBR | 0.864 | 5 | 74 | ○ |
| Example 3 | Li6PS5Cl | SBR | 0.864 | 3 | 70 | ○ |
| Example 4 | Li6PS5Cl | SBR | 0.864 | 2 | 63 | × |
| Example 5 | Li6PS5Cl | PVdF | 6.98 | 10 | 43 | ○ |
| Example 6 | Li6PS5Cl | PVdF | 6.98 | 3 | 47 | ○ |
| Example 7 | Li6PS5Cl | PVdF | 6.98 | 2 | 52 | × |
| Example 8 | Li6PS5Cl | PVdF | 42.4 | 2 | 36 | × |
| Example 9 | Li6PS5Cl | PVdF | 1.29 | 2 | 34 | × |
| Example 10 | Li6PS5Cl | PVdF | 200 | 2 | 27 | × |

From the results shown in Table 1 and Fig. 8, it can be seen that, according to each of the Examples (present invention), even in a case where a binder was added to the solid electrolyte layer, the decrease in ion conductivity in the solid electrolyte layer could be sufficiently suppressed. It is presumed that this effect was obtained by a situation in which the binder (having a small Young's modulus and being flexible) present between the solid electrolyte particles was pushed out by the application of the pressing pressure and moved to a void, so that the solid electrolyte particles could come into direct contact with each other.

In addition, comparing the respective Examples, it has been found that in a case where the addition amount of the binder was 3 mass% or more with respect to 100 mass% of the solid electrolyte, no destruction occurred in the sample, and this is preferred. It is presumed that this effect was obtained by a situation in which the flexibility of the solid electrolyte layer of the sample was also improved with an increase in the addition amount of the binder (having a small Young's modulus and being flexible).

Reference Signs List

10, 10a     Laminate type battery
10b          Bipolar type battery
11            Current collector
11'           Negative electrode current collector
11"          Positive electrode current collector
13            Negative electrode active material layer

| 15 | Positive electrode active material layer |
| 17 | Solid electrolyte layer |
| 19 | Single battery layer |
| 21 | Power-generating element |
| 25 | Negative electrode current collecting plate |
| 27 | Positive electrode current collecting plate |
| 29 | Laminate film |
| 100 | Battery device |
| 200 | Metal plate |
| 300 | Bolt |
| 400 | Nut |

**Claims**

1. A secondary battery comprising a power-generating element formed by laminating a positive electrode which contains a positive electrode active material, a solid electrolyte layer which contains a solid electrolyte, and a negative electrode which contains a negative electrode active material in this order, wherein the solid electrolyte layer further contains a binder having a Young's modulus of 200 [MPa] or lower.

2. The secondary battery according to claim 1, wherein the Young's modulus is 50 [MPa] or lower.

3. The secondary battery according to claim 1 or 2, wherein the solid electrolyte contains a sulfide solid electrolyte.

4. The secondary battery according to any one of claims 1 to 3, wherein the binder contains one or two or more selected from the group consisting of acrylonitrile butadiene rubber (NBR), butadiene rubber (BR), polyvinylidene fluoride (PVdF), polytetrafluoroethylene (PTFE), styrene-butadiene rubber (SBR), polyethylene carbonate (PEC), and polyethylene oxide (PEO).

5. The secondary battery according to any one of claims 1 to 4, wherein a content of the binder in the solid electrolyte layer is 3 mass% or more with respect to 100 mass% of the solid electrolyte.

6. The secondary battery according to any one of claims 1 to 5, wherein a ratio of a content of a binder having a Young's modulus of 200 [MPa] or lower to a total of 100 mass% of the binder contained in the solid electrolyte layer is 50 mass% or more.

7. The secondary battery according to any one of claims 1 to 6, wherein the secondary battery is an all-solid lithium-ion secondary battery.

8. A battery device comprising:

   the secondary battery according to any one of claims 1 to 7; and
   a pressurizing member that pressurizes a power-generating element of the secondary battery in a direction of lamination,
   wherein a pressing pressure of 50 to 200 [MPa] is applied to the power-generating element by the pressure member.

[Fig. 1]

[Fig. 2]

[Fig. 3]

SOLID
ELECTROLYTE

BINDER (LOW YOUNG'S MODULUS)

SOLID
ELECTROLYTE

BINDER (HIGH YOUNG'S MODULUS)

[Fig. 4]

←LOW YOUNG'S
MODULUS (1.3 MPa)

(1300 MPa) HIGH →
YOUNG'S MODULUS

SECONDARY
ELECTRON IMAGE

REFLECTED
ELECTRON IMAGE

[Fig. 5]

[Fig. 6]

100

[Fig. 7]

100

[Fig. 8]

## INTERNATIONAL SEARCH REPORT

International application No.

PCT/IB2020/000526

**A. CLASSIFICATION OF SUBJECT MATTER**
H01M 10/0562(2010.01)i; H01M 2/02(2006.01)i
FI: H01M10/0562; H01M2/02 Z
According to International Patent Classification (IPC) or to both national classification and IPC

**B. FIELDS SEARCHED**

Minimum documentation searched (classification system followed by classification symbols)
H01M10/0562; H01M2/02

| Documentation searched other than minimum documentation to the extent that such documents are included in the fields searched | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
JSTPlus (JDreamIII); JST7580 (JDreamIII); JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | WO 2020/036055 A1 (FUJIFILM CORPORATION) 20 February 2020 (2020-02-20) paragraphs [0009]-[0011], [0047]-[0084], tables 1-3, 5 | 1-7 |
| Y | paragraphs [0009]-[0011], [0047]-[0084], tables 1-3, 5 | 8 |
| X | WO 2018/151119 A1 (FUJIFILM CORPORATION) 23 August 2018 (2018-08-23) paragraphs [0008], [0019], tables 1-3 | 1-7 |
| Y | paragraphs [0008], [0019], tables 1-3 | 8 |
| Y | JP 2011-108558 A (HITACHI ZOSEN CORP.) 02 June 2011 (2011-06-02) paragraphs [0008], [0024] | 8 |
| Y | JP 2019-145247 A (TOYOTA MOTOR CORP.) 29 August 2019 (2019-08-29) paragraph [0016], fig. 1 | 8 |

☐ Further documents are listed in the continuation of Box C.   ☒ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 18 August 2020 (18.08.2020) | 01 September 2020 (01.09.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

| International application No. |
| --- |
| PCT/IB2020/000526 |

| Patent Documents referred in the Report | Publication Date | Patent Family | Publication Date |
| --- | --- | --- | --- |
| WO 2020/036055 A1 | 20 Feb. 2020 | (Family: none) | |
| WO 2018/151119 A1 | 23 Aug. 2018 | US 2019/0319303 A1 paragraphs [0011]-[0025], [0051], tables 1-3 EP 3584871 A1 KR 10-2019-0088525 A CN 110291675 A | |
| JP 2011-108558 A | 02 Jun. 2011 | (Family: none) | |
| JP 2019-145247 A | 29 Aug. 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180342768 A

- WO 2010044437 A

**Non-patent literature cited in the description**

- *Chem. Mater.,* 2011, vol. 23, 5024-5028